# EUROPÄISCHE PATENTANMELDUNG

(11) **EP 4 631 773 A1**
(43) Veröffentlichungstag der Anmeldung: **15.10.2025**
(21) Anmeldenummer: 24169010.6
(22) Anmeldetag: 08.04.2024
(51) Int. Cl.: B60L 50/60, B60L 50/64, H01M 50/202, H01M 50/204, H01M 50/244, H01M 50/249, H01M 50/271

(54) **KRAFTFAHRZEUG MIT EINER HOCHVOLTBATTERIE**

(71) Anmelder: MAGNA STEYR Fahrzeugtechnik GmbH & Co KG, 8041 Graz (AT)
(72) Erfinder: ERLACHER, Manuel, 9545 Radenthein (AT); SCHWARZL, Werner, 8301 Laßnitzhöhe (AT)
(74) Vertreter: Zangger, Bernd

(57) **Zusammenfassung**

Ein Kraftfahrzeug mit einer Hochvoltbatterie, wobei die Hochvoltbatterie ein Batteriegehäuse umfasst, wobei das Batteriegehäuse Seitenwände (1.1) und einen die Seitenwände (1.1) oben bedeckenden Deckel (1.2) umfasst, wobei eine Vielzahl von Batteriezellen (2) im Batteriegehäuse angeordnet sind, wobei die Seitenwände (1.1) und der Deckel (1.2) einteilig durch eine unten offene Wanne (1) ausgebildet sind, wobei eine Trägerplatte (4) den, die Wanne (1) an deren Unterseite bedeckenden Boden der Hochvoltbatterie bildet, wobei die Trägerplatte (4) ein Druckgussbauteil ist, wobei die Trägerplatte (4) einstückig Befestigungskörbe (6) zur Aufnahme der Batteriezellen (2) ausbildet, wobei die Batteriezellen (2) stehend auf der Trägerplatte (4) in den Befestigungskörben (6) montiert sind, so dass die elektrischen Kontakte der Batteriezellen (2) nach oben gerichtet sind und die Zellenböden nach unten gerichtet sind und ein Verfahren zur Herstellung eines solchen Kraftfahrzeugs.

## Beschreibung

### Gebiet der Erfindung

Die vorliegende Erfindung betrifft ein Kraftfahrzeug mit einer Hochvoltbatterie und ein Verfahren zur Herstellung eines solchen Kraftfahrzeugs.

### Stand der Technik

Es ist bekannt, dass Hochvoltbatterien in Kraftfahrzeuge verbaut werden können, insbesondere als Antriebsbatterie zur Bereitstellung einer elektrischen Energie für den Antrieb des Kraftfahrzeugs. Die Batterie besitzt dann ein Batteriegehäuse, das die Zellmodule beherbergt. Batteriegehäusen sind üblicherweise aus verschiedenen Einzelteilen zusammengesetzt, Das Batteriegehäuse wird in einem Unterboden mittels Schrauben verbaut und ist demontierbar. Die Dichtheit der Fahrzeugkarosserie wird über entsprechende Bauteile in der Bodengruppe sichergestellt und ist unabhängig vom Batteriegehäuse. Dabei ist, außer an den Schraubstellen, üblicherweise ein Spalt zwischen der Batterie und der Fahrzeugstruktur von mindestens einigen Millimetern vorhanden, damit ein Scheuern im Betrieb (Geräusche, Korrosion...) vermieden wird, aber auch um eine kollisionsfreie Montage zu ermöglichen. Zur Wartung oder Reparatur muss die komplette Batterieeinheit vom Fahrzeug demontiert werden.

### Zusammenfassung der Erfindung

Es ist eine Aufgabe der Erfindung, ein Kraftfahrzeug mit einer Hochvoltbatterie anzugeben, wobei die Hochvoltbatterie einen geringen Bauraumbedarf hat, sodass der Energieinhalt im Hochvoltspeicher vergrößert sein kann und damit die Reichweite des Fahrzeuges erhöht wird, wobei auch Gewicht und Herstellungskosten niedrig sind. Eine weitere Aufgabe ist es, ein einfaches und kostengünstiges Verfahren zur Herstellung eines solchen Kraftfahrzeugs anzugeben.

Die Lösung der Aufgabe erfolgt durch ein Kraftfahrzeug mit einer Hochvoltbatterie, wobei die Hochvoltbatterie ein Batteriegehäuse umfasst, wobei das Batteriegehäuse Seitenwände und einen die Seitenwände oben bedeckenden Deckel umfasst, wobei eine Vielzahl von Batteriezellen im Batteriegehäuse angeordnet sind, wobei die Seitenwände und der Deckel einteilig durch eine unten offene Wanne ausgebildet sind, wobei eine Trägerplatte den, die Wanne an deren Unterseite bedeckenden Boden der Hochvoltbatterie bildet, wobei die Trägerplatte ein Druckgussbauteil ist, wobei die Trägerplatte einstückig Befestigungskörbe zur Aufnahme der Batteriezellen ausbildet, wobei die Batteriezellen stehend auf der Trägerplatte in den Befestigungskörben montiert sind, so dass die elektrischen Kontakte der Batteriezellen nach oben gerichtet sind und die Zellenböden nach unten gerichtet sind.

Erfindungsgemäß weist ein Hochvoltspeicher ein Batteriegehäuse auf, dass im Gegensatz zu den herkömmlichen Bauweisen keine getrennten seitlichen Gehäuse- bzw. Rahmenbauteile und keinen getrennten Deckel verwendet, sondern eine Wanne, die die Seitenwände und den in Einbaulage im Kraftfahrzeug oben liegenden Deckel des Batteriegehäuses ausbildet. Diese verkehrte Wanne kann einfach und kostengünstig Deckel und Wände eines Batteriegehäuses ausbilden, das mit weiteren Batteriebauteilen, wie insbesondere Batteriezellen bestückt werden und in die Fahrzeugkarosserie strukturintegriert eingebaut werden kann. Die Wanne kann dabei beispielsweise direkt auf das Bodenblech des Kraftfahrzeugs anschließen oder einen Abstand dazu aufweisen.

Eine bevorzugt massiv ausgeführte Trägerplatte bildet den Boden des Batteriegehäuses aus, auf den die Wanne als Deckel aufgesetzt und bevorzugt befestigt ist. Die Trägerplatte ist als Druckgussbauteil hergestellt und ausreichend massiv zur Aufnahme der Batteriezellen. Das Druckgussbauteil bildet einstückig auch Befestigungskörbe aus, in welche die Batteriezellen eingebracht werden können.

Ein Verzicht auf getrennte zusätzliche Bauteile, wie einen getrennten Batteriedeckel oder getrennte Seitenteile und Befestigungsteile zur Aufnahme der Batteriezellen, stellt einen Kosten- und Gewichtsvorteil dar. Durch diese Lösung kann auch der Energieinhalt im Hochvoltspeicher vergrößert und damit die Reichweite des Fahrzeuges erhöht werden. Die Crash- und Torsionssteifigkeiten können dabei hochwertig bleiben.

Eine Modulbauweise der Batteriezellen kann bei dieser Batterielösung durch eine cell-to-pack Anordnung ersetzt werden, wodurch eine höhere Energiedichte bei gleichem Bauraum realisiert werden kann.

Die Batteriezellen können auf einfache und kostengünstige Art in einem Vormontageprozess, beispielsweise bei einem Lieferanten, bevorzugt direkt als Batteriezellen ohne Verbau in einem Batteriemodul, auf die Trägerplatte montiert werden, die den Boden des Batteriegehäuses bildet, insbesondere in Befestigungskörbe der Trägerplatte eingesetzt werden. Nach der Bestückung der Trägerplatte mit den Batteriezellen, und bevorzugt nach der elektrischen Verbindung der Batteriezellen, kann die fertig bestückte Trägerplatte mit der Wanne gefügt werden, insbesondere verschraubt werden, um das Batteriegehäuse zu schließen.

Die fertige Hochvoltbatterie kann dann in eine Fahrzeugkarosserie eingebaut werden, bevorzugt von unten, in einer übrigen Tragstruktur des Kraftfahrzeugs, insbesondere an seitlichen Schwellern des Kraftfahrzeugs montiert werden. Die Montage erfolgt bevorzugt unter Verwendung von mechanischen Fügeelementen, wie Schrauben oder Nieten.

Weiterbildungen der Erfindung sind in den abhängigen Ansprüchen, der Beschreibung sowie den beigefügten Zeichnungen angegeben.

Bevorzugt ist der Deckel an der Trägerplatte befestigt, besonders bevorzugt an der Trägerplatte verschraubt. Im Bereich der Befestigung, insbesondere Verschraubung, ist vorzugsweise eine Dichtung angeordnet, um die Wanne gegen die Trägerplatte abzudichten.

Besonders bevorzugt sind zumindest eine oder mehrere flächige Kühlplatten auf der Trägerplatte angeordnet, unterhalb der Batteriezellen.

Die Trägerplatte bildet bevorzugt ein Unterfahrschutzblech des Kraftfahrzeugs aus. Die Zugänglichkeit zu den Batteriezellen kann von unten gewährleistet sein, über die bevorzugt demontierbare Trägerplatte, die gleichzeitig als Unterfahrschutz dient.

Bevorzugt ist der Deckel der Wanne unterhalb eines Bodenblechs des Kraftfahrzeugs angeordnet. Sitzquerträger sind bevorzugt an dem Bodenblech des Kraftfahrzeugs befestigt, insbesondere mit dem Bodenblech verklebt und/oder verschraubt.

Ein flächiges Feuerschutzelement ist bevorzugt unterhalb des Deckels der Wanne und oberhalb der Batteriezellen, also zwischen Deckel und Batteriezellen, angeordnet. Das Feuerschutzelement kann am Deckel befestigt sein, beispielsweise geklebt und/oder verschraubt.

Vorzugsweise ist die Trägerplatte an einer übrigen Tragstruktur des Kraftfahrzeugs, bevorzugt an seitlichen Schwellern des Kraftfahrzeugs, von unten montiert, bevorzugt geklebt und/oder geschraubt. Der Schweller kann beispielsweise in Schalenbauweise oder aus Strangpressprofilen hergestellt sein.

Vorzugsweise sind eine Vielzahl von Längsträgern und/oder von Querträgern der Tragstruktur des Kraftfahrzeugs innerhalb der Wanne der Hochvoltbatterie angeordnet.

Die Längsträger und/oder Querträger können einstückig durch die Trägerplatte ausgebildet sein.

Bevorzugt sind die Befestigungskörbe zur Aufnahme der Batteriezellen abschnittsweise oder vollständig durch die Längsträger und/oder durch die Querträger ausgebildet, sodass die Batteriezellen stehend auf der Trägerplatte zwischen den Längsträgern und/oder zwischen den Querträgern montiert sind. Die Befestigungskörbe können somit allein durch die Längsträger oder allein durch Querträger ausgebildet sein. Die Befestigungskörbe können beispielsweise lediglich durch zwei parallele Seitenwände gebildet sein, oder auch durch vier Begrenzungswände. Längsträgern und Querträger können beispielsweise zusammen vier begrenzende Wände der Befestigungskörbe ausbilden.

Bevorzugt sind die Batteriezellen jeweils in den Zwischenräumen zwischen den Längsträgern und/oder Querträgern stehend an den Längsträgern und/oder an den Querträgern montiert, so dass mehrere parallele Reihen von Batteriezellen zwischen den Längsträgern und/oder Querträgern verlaufen.

Die Batteriezellen können einzeln montiert sein oder in Batteriezellenmodule zusammengefasst montiert sein. Die Hochvoltbatterie kann somit stehend montierte Batteriemodule aufweisen.

In der Trägerplatte, als einteiliges Gussbauteil, kann auch ein Ableitsystem für Ventinggase ausgebildet sein.

Ein erfindungsgemäßes Verfahren zur Herstellung eines Kraftfahrzeugs, wie zuvor beschrieben, kann vorsehen, dass die Wanne als Druckgussbauteil, insbesondere in einem sogenannten "Megacasting"-Verfahren, hergestellt wird.

Ein erfindungsgemäßes Verfahren zur Herstellung eines Kraftfahrzeugs, wie zuvor beschrieben, kann vorsehen, dass in einem Vormontageprozess die Batteriezellen auf die Trägerplatte in die Befestigungskörbe eingesetzt werden, dann die Wanne mit der Trägerplatte gefügt wird, zur Herstellung der Hochvoltbatterie, und danach die vormontierte Hochvoltbatterie von unten in einer übrigen Tragstruktur des Kraftfahrzeugs montiert wird, bevorzugt an seitlichen Schwellern des Kraftfahrzeugs befestigt wird.

Zumindest ein flächiges Kühlelement, also eine Kühlplatte, kann vor dem Montieren der Batteriezellen auf der Trägerplatte angeordnet werden, zum Beispiel eingelegt werden. Danach werden die Batteriezellen auf die Trägerplatte, insbesondere in die Befestigungskörbe, eingesetzt. Danach können die Batteriezellen verschaltet werden. Dann können die Trägerplatte und die Wanne miteinander verschraubt werden. Die Trägerplatte ist als einteiliges Gussteil ausgeführt, zusammen mit den Befestigungskörben.

Nach dem Verschrauben der Trägerplatte mit der Wanne um das Gehäuse zu bilden, kann eine Kontaktierung der Zellen zu Steckerverbindungen an einer Stirnseite des Gehäuses beispielsweise durch eine Ausnehmung erfolgen. Danach kann eine Schließplatte, die auch die Steckverbindungen beinhaltet, gasdicht an das Gehäuse verschraubt werden.

Die Vormontage des Batteriegehäuses kann im ausgebauten Zustand, außerhalb des herzustellenden Kraftfahrzeugs, erfolgen.

Die vormontierte Batterie kann an ein Montageband gebracht werden und von unten mittels üblicher Manipulationsvorrichtungen in das Fahrzeug eingebaut werden.

Die vormontierte Hochvoltbatterie kann von unten in eine übrigen Tragstruktur des Kraftfahrzeugs eingebracht und dort montiert werden, bevorzugt an seitlichen Schwellern des Kraftfahrzeugs befestigt werden, zum Beispiel verschraubt werden.

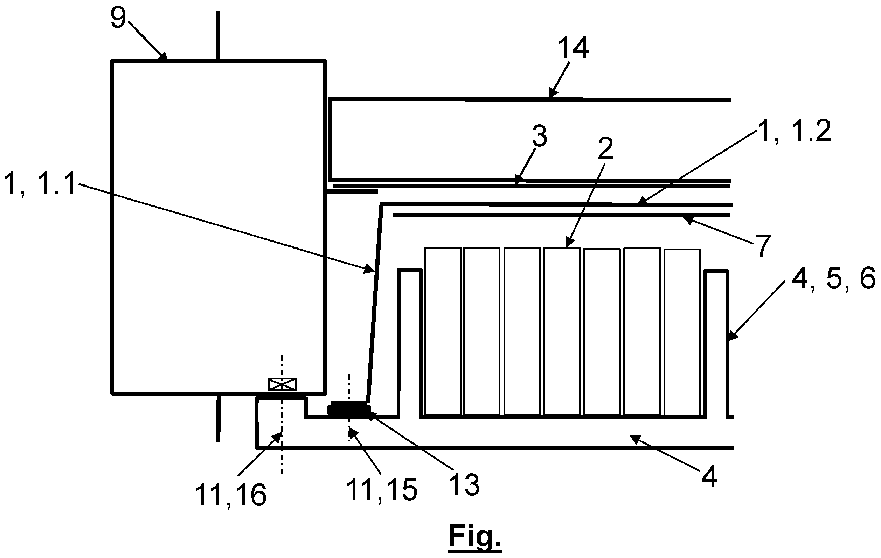

### Kurzbeschreibung der Zeichnung

Die Erfindung wird im Folgenden beispielhaft unter Bezugnahme auf die Zeichnung beschrieben.
- Fig.: ist eine Schnittansicht eines Teilbereichs eines erfindungsgemäßen Kraftfahrzeugs in Querrichtung des Fahrzeugs (X-Schnitt).

### Detaillierte Beschreibung der Erfindung

Fig. ist eine schematische Darstellung einer Hochvoltbatterie in einer Wanne 1 eines erfindungsgemäßen Kraftfahrzeugs, in Querrichtung. Das Fahrzeug ist also von vorne gesehen.

Das ausschnittsweise dargestellte Kraftfahrzeug umfasst eine Hochvoltbatterie, die ein Batteriegehäuse umfasst, wobei das Batteriegehäuse Seitenwände 1.1 und einen die Seitenwände 1.1 oben bedeckenden Deckel 1.2 umfasst. Die Seitenwände 1.1 und der Deckel 1.2 sind einteilig durch eine unten offene Wanne 1 ausgebildet.

Eine Vielzahl von Batteriezellen 2 sind im Batteriegehäuse, also in der Wanne 1, angeordnet. Die Batteriezellen 2 sind stehend innerhalb der Wanne 1 auf einer Trägerplatte 4 montiert, so dass die elektrischen Kontakte der Batteriezellen 2 nach oben gerichtet sind und die Zellenböden nach unten gerichtet sind.

Die Batteriezellen 2 sind auf einer Trägerplatte 4 montiert, wobei die Trägerplatte 4 Befestigungskörbe 6 ausbildet. Die Trägerplatte 4 ist ein Gussbauteil.

Flächige Kühlplatten können auf dem Zellenträger 6 angeordnet sein, unterhalb der Batteriezellen 2.

Der Deckel 1.2 der Wanne 1 verläuft unterhalb eines Bodenblechs 3 des Kraftfahrzeugs, parallel zum Bodenblech 3. Sitzquerträger 14 können auf dem Bodenblech 3 befestigt werden, beispielsweise verschraubt werden.

Ein flächiges Feuerschutzelement 7 ist unterhalb des Deckels 1.2 der Wanne 1 und oberhalb der Batteriezellen 2 angeordnet.

Seitlich geht der Deckel 1.2 der Wanne 1 in Seitenwände 1.1 des Batteriegehäuses über. Die Seitenwände 1.1 sind dann in einem unten liegenden Flanschbereich mit der Trägerplatte 4 gefügt, nämlich an einem Befestigungspunkt 15 der Wanne 4 durch eine Verschraubung 11 befestigt. Im Bereich der Verschraubung 11 ist eine Dichtung 13 angeordnet, die zwischen Wanne 1 und Trägerplatte 4 abdichtet. Zusätzlich oder alternativ zur Verschraubung kann die Wanne 1 an der Trägerplatte 4 auch geklebt sein.

Die Trägerplatte 4 ist an einer übrigen Tragstruktur des Kraftfahrzeugs, nämlich an seitlichen Schwellern 9 des Kraftfahrzeugs montiert, bevorzugt von unten montiert. Die Befestigung erfolgt an Befestigungspunkten 16 der Trägerplatte 4 über Verschraubungen 11, bevorzugt zusätzlich durch Klebstoff.

Eine Vielzahl von Längsträgern 5 der Tragstruktur des Kraftfahrzeugs sind innerhalb der Wanne 1 der Hochvoltbatterie angeordnet, wobei die Längsträger 5 einstückig durch die Trägerplatte 4 ausgebildet sind.

Die Befestigungskörbe 6, zur Aufnahme der Batteriezellen 2, sind zumindest zum Teil oder zur Gänze durch die Längsträger 5 ausgebildet. Die Batteriezellen 2 sind, bevorzugt ohne Bildung von Modulen, stehend auf der Trägerplatte 4 zwischen den Längsträgern 5 montiert. Normal auf die Längsträger 5 können Querträger in der Wanne 1 angeordnet sein.

Die Batteriezellen 2 können an den Längsträgern 5 und/oder an Querträgern über mechanische Fügeelemente, wie Schrauben, befestigt, also zum Beispiel verschraubt sein.

Die Trägerplatte 4 bildet den die Wanne 1 an deren Unterseite bedeckenden Boden der Hochvoltbatterie.

Die Trägerplatte 4 ist als massives Bauteil ausgebildet. Die Trägerplatte 4 kann wesentlich zur Aufnahme von Kräften der Tragstruktur des Kraftfahrzeuges beitragen. Die Wanne 1 ist im Gegensatz dazu bevorzugt ein nicht lasttragendes Bauteil und kann daher leicht und kostengünstig hergestellt sein.

Bei dieser Bauweise wird somit ein Batteriedeckel, nämlich die Wanne 1 umfassend den Deckelteil der Wanne 1.2 und die Seitenwände der Wanne 1.1, direkt auf eine massive Trägerplatte 4 für die Batteriezellen 2 gesetzt und mit dieser verschraubt.

Dadurch ergibt sich bereits ein geschlossenes Gehäuse, bei dem auf einen umlaufenden tragenden Rahmen verzichtet werden kann. Die Trägerplatte 4 hat weiters Befestigungspunkte integriert, mit denen die Batterie an den Unterbau, beispielsweise an einen Schweller 9, verschraubt werden kann.

Die Trägerplatte 4 für die Batteriezellen 2 kann als einteiliges Gußbauteil hergestellt werden.

Die Trägerplatte 4 bildet nach oben hin Taschen aus, nämlich die Befestigungskörbe 6, in denen die Batteriezellen 2 direkt eingesetzt werden können, ohne vorher als Module zusammengefasst werden zu müssen.

Die Vormontage der Batterie erfolgt bevorzugt im ausgebauten Zustand beispielsweise bei einem Lieferanten.

Zuerst werden die Kühlplatten in die Trägerplatte 4 eingelegt, anschließend werden die Zellen 2 von oben in die Trägerplatte 4 eingesetzt und elektrisch miteinander verbunden.

Zum Schluss wird der Deckel, also die Wanne 1, auf die Trägerplatte 4 aufgeschraubt und die Batterie wird elektrisch geprüft und dichtgeprüft.

Anschließend wird die Batterie als fertiges Modul an die Fahrzeugmontagelinie angeliefert, und kann an das Fahrzeug verschraubt werden.

Ein wesentlicher Vorteil dieser Anordnung ist die Einsparung des Rahmens, was mit einer Kosten- und Gewichtsreduktion verbunden ist. Die Integration mehrerer Bauteile im Bodenbereich zur Trägerplatte bedeutet weiters eine geringere Komplexität in der Fertigung. Die Modulbauweise der Batteriezellen kann bei dieser Batterie durch eine cell-to-pack Anordnung ersetzt werden, wodurch eine höhere Energiedichte bei gleichem Bauraum realisiert werden kann.

In der Trägerplatte als einteiliges Gussbauteil kann auch ein Ableitsystem für Ventinggase bei einem thermal runaway mitintegrieret werden, was einen zusätzlichen Vorteil gegenüber herkömmlich verschweißten Rahmenbatterien bedeutet.

Die Batteriemodule 2 sind dabei auf der Trägerplatte 4 stehend angeordnet. Die Trägerplatte 4 ist gleichzeitig als Unterfahrschutz ausgeführt und ist beispielsweise wieder demontierbar.

Nach dem Verschrauben der Trägerplatte 4 mit der Wanne 1 erfolgt die Kontaktierung der Zellen 2 zu Steckerverbindungen an der Stirnseite des Gehäuses durch eine Ausnehmung. Danach wird eine Schließplatte, die auch die Steckverbindungen beinhaltet, gasdicht an das Gehäuse verschraubt.

Die Wartung oder Reparatur der Batteriezellen 2 kann im ausgebauten Zustand der Trägerplatte 4 von oben durchgeführt werden.

### Bezugszeichenliste

- 1: Wanne
- 1.1: Wanne Seitenwand
- 1.2: Wanne Deckel
- 2: Batteriezellen
- 3: Bodenblech
- 4: Trägerplatte
- 5: Längsträger
- 6: Befestigungskorb
- 7: Feuerschutzelement
- 9: Schweller
- 11: Verschraubung
- 13: Dichtung
- 14: Sitzquerträger
- 15: Befestigungspunkt Wanne
- 16: Befestigungspunkt Trägerplatte

## Patentansprüche

1. Kraftfahrzeug mit einer Hochvoltbatterie, wobei die Hochvoltbatterie ein Batteriegehäuse umfasst, wobei das Batteriegehäuse Seitenwände (1.1) und einen die Seitenwände (1.1) oben bedeckenden Deckel (1.2) umfasst, wobei eine Vielzahl von Batteriezellen (2) im Batteriegehäuse angeordnet sind,
**dadurch gekennzeichnet , dass** die Seitenwände (1.1) und der Deckel (1.2) einteilig durch eine unten offene Wanne (1) ausgebildet sind, wobei eine Trägerplatte (4) den, die Wanne (1) an deren Unterseite bedeckenden Boden der Hochvoltbatterie bildet, wobei die Trägerplatte (4) ein Druckgussbauteil ist, wobei die Trägerplatte (4) einstückig Befestigungskörbe (6) zur Aufnahme der Batteriezellen (2) ausbildet, wobei die Batteriezellen (2) stehend auf der Trägerplatte (4) in den Befestigungskörben (6) montiert sind, so dass die elektrischen Kontakte der Batteriezellen (2) nach oben gerichtet sind und die Zellenböden nach unten gerichtet sind.

2. Kraftfahrzeug nach Anspruch 1,
**dadurch gekennzeichnet , dass** der Deckel (1.2) an der Trägerplatte (4) befestigt ist, bevorzugt an der Trägerplatte (4) verschraubt ist.

3. Kraftfahrzeug nach zumindest einem der vorhergehenden Ansprüche,
**dadurch gekennzeichnet , dass** die Trägerplatte (4) ein Unterfahrschutzblech des Kraftfahrzeugs ausbildet.

4. Kraftfahrzeug nach zumindest einem der vorhergehenden Ansprüche,
**dadurch gekennzeichnet , dass** zumindest eine, bevorzugt mehrere flächige Kühlplatten auf der Trägerplatte (4) angeordnet sind, unterhalb der Batteriezellen (2).

5. Kraftfahrzeug nach zumindest einem der vorhergehenden Ansprüche,
**dadurch gekennzeichnet , dass** der Deckel (1.2) der Wanne (1) unterhalb eines Bodenblechs (3) des Kraftfahrzeugs angeordnet ist.

6. Kraftfahrzeug nach zumindest einem der vorhergehenden Ansprüche,
**dadurch gekennzeichnet , dass** ein flächiges Feuerschutzelement (7) unterhalb des Deckels (1.2) der Wanne (1) und oberhalb der Batteriezellen (2) angeordnet ist.

7. Kraftfahrzeug nach zumindest einem der vorhergehenden Ansprüche,
**dadurch gekennzeichnet , dass** die Trägerplatte (4) an einer übrigen Tragstruktur des Kraftfahrzeugs, bevorzugt an seitlichen Schwellern (9) des Kraftfahrzeugs, von unten montiert ist, bevorzugt verschraubt.

8. Kraftfahrzeug nach zumindest einem der vorhergehenden Ansprüche,
**dadurch gekennzeichnet , dass** eine Vielzahl von Längsträgern (5) und/oder Querträgern der Tragstruktur des Kraftfahrzeugs innerhalb der Wanne (1) der Hochvoltbatterie angeordnet sind.

9. Kraftfahrzeug nach Anspruch 8,
**dadurch gekennzeichnet , dass** die Längsträger (5) und/oder Querträger einstückig durch die Trägerplatte (4) ausgebildet sind.

10. Kraftfahrzeug nach Anspruch 9,
**dadurch gekennzeichnet , dass** die Befestigungskörbe (6) zur Aufnahme der Batteriezellen (2) abschnittsweise oder vollständig durch die Längsträger (5) und/oder durch die Querträger ausgebildet sind, sodass die Batteriezellen (2) stehend auf der Trägerplatte (4) zwischen den Längsträger (5) und/oder Querträgern montiert sind.

11. Verfahren zur Herstellung eines Kraftfahrzeugs nach zumindest einem der Ansprüche 1 bis 10,
**dadurch gekennzeichnet , dass** in einem Vormontageprozess die Batteriezellen (2) auf die Trägerplatte (4) in die Befestigungskörbe (6) eingesetzt werden, dann die Wanne (1) mit der Trägerplatte (4) gefügt wird, zur Herstellung der Hochvoltbatterie, und danach die vormontierte Hochvoltbatterie von unten in einer übrigen Tragstruktur des Kraftfahrzeugs montiert wird, bevorzugt an seitlichen Schwellern (9) des Kraftfahrzeugs befestigt wird.
